# EUROPÄISCHE PATENTANMELDUNG

(11) **EP 0 982 873 A2**
(43) Veröffentlichungstag der Anmeldung: **01.03.2000**
(21) Anmeldenummer: 99810673.6
(22) Anmeldetag: 26.07.1999
(51) Int. Cl.: H04B 3/54, H04B 3/46

(54) **Testverfahren für PLC-Modems mit virtuellen Stromleitungen**

(30) Priorität: 21.08.1998 DE 19838048
(71) Anmelder: ABB RESEARCH LTD., 8050 Zürich (CH)
(72) Erfinder: Ramseier, Stefan, Dr., 5416 Kirchdorf (CH); Sabbattini, Bruno, 5430 Wettingen (CH)
(74) Vertreter: Clerc, Natalia

(57) **Zusammenfassung**

Die Erfindung beschreibt ein Verfahren zur vereinfachten Entwicklung und zum Testen von PLC(power line carrier)-Modems. Es wird vorgeschlagen, PLC-Modems über virtuelle statt über reale Stromleitungen zu testen. Der Kern der Erfindung besteht darin, ein Telegramm S1 eines Sendemodems 1 in einen Computer 2 einzuspeisen und zur Berechnung eines Empfangssignals S2 eine bekannte Impulsantwort S3 und/oder ein Rauschsignal S4 einer realen Stromleitung zu verwenden. Bevorzugt werden ein Rauschsignal S4 mit vorgebbarer Zeitverzögerung At sowie frei wählbare Gewichtungsfaktoren M1, M2 für die Impulsantwort S3 und das Rauschsignals S4 verwendet. Wichtige Vorteile des erfindungsgemässen Testverfahrens bestehen darin, dass der Aufwand realer Feldversuche vermieden wird und die Messbedingungen in virtuellen Feldversuchen mit PLC-Modems 1, 3 auf sehr einfache Weise definierbar und veränderbar sind.

## Beschreibung

### TECHNISCHES GEBIET

Die vorliegende Erfindung betrifft das Gebiet der Datenkommunikation über Stromversorgungsleitungen auf Hoch-, Mittel- und Niederspannungsebene. Sie geht aus von einem Verfahren zum Test von Kommunikationsgeräten oder Modems nach dem Oberbegriff des ersten Anspruchs.

### STAND DER TECHNIK

Sogenannte Power Line Carrier (PLC) Modems zur Datenübertragung über Stromleitungen sind wohlbekannt. In der Regel wird dabei ein Kommunikationssignal, welches z.B. Steuerdaten oder Sprache enthält, auf einen Träger aufmoduliert, und das modulierte Trägersignal wird in eine oder mehrere der Leitungen eingekoppelt.

Stromleitungen sind als Kommunikationskanal wenig geeignet, da sie oftmals ein (stark) frequenzselektives Übertragungsverhalten zeigen und mit starkem Rauschen oder Störungen belastet sind. Das Rauschen kann weiss oder frequenzabhängig, insbesondere permanent und schmalbandig ("narrow band jammer") oder impulsartig und breitbandig ("spiky noise"), sein. Dies stellt hohe Anforderungen an die Entwicklung und das Testen von PLC-Modems.

Die Erfindung nimmt Bezug auf den Artikel von S. Ramseier et al., "A Novel Method for Measuring the Characteristics of the Powerline Channel for High speed Communications", Proceedings of the 1998 International Symposium on Powerline Communications and its Applications, Soka University, Tokyo, 1998. Dort wird eine Methode zur Messung der Impulsantwort oder komplexen linearen Übertragungsfunktion und des Rauschens einer Stromleitung beschrieben. Eine vollständige Kenntnis des Übertragungsverhaltens ist besonders für die Entwicklung schneller PLC-Modems wichtig. Insbesondere können durch Korrelation einer gesendeten mit einer transmittierten pseudozufälligen binären Sequenz von schwachen Spannungssignalen dreiecksförmige starke Eingangsspannungspulse simuliert und die Impulsantwort des Kommunikationskanals gemessen werden. Eine Abflachung des Frequenzspektrums bei höheren Frequenzen aufgrund der endlichen Pulsdauer kann durch eine entgegengesetzte Filtercharakteristik kompensiert werden. Das Rauschverhalten der Stromleitung wird bevorzugt durch eine kombinierte Zeit-Frequenz-Analyse charakterisiert. Der gesamte Inhalt dieses Artikels soll hiermit als Bestandteil der vorliegenden Offenbarung gelten.

### DARSTELLUNG DER ERFINDUNG

Die Erfindung stellt sich die Aufgabe, für Kommunikationsgeräte zur Datenübertragung über Stromleitungen (PLC-Modems) den Entwicklungsaufwand zu reduzieren und die Entwicklungszeiten zu verkürzen. Diese Aufgabe wird erfindungsgemäss durch die Merkmale des Anspruchs 1 gelöst.

Kern der Erfindung ist es, ein Verfahren für virtuelle Feldversuche mit PLC-Modems anzugeben, bei welchem eine Stromleitung mit Hilfe einer Impulsantwort und/oder eines Rauschsignals auf einem Computer simuliert und zum Test von PLC-Modems verwendet wird.

Ein Ausführungsbeispiel stellt eine Realisierung der Computersimulation dar, bei der ein Telegramm mit der Impulsantwort gefaltet und ein Rauschsignal hinzuaddiert wird.

Ein Vorteil der Erfindung besteht darin, dass die Messbedingungen in virtuellen Feldversuchen mit PLC-Modems auf sehr einfache Weise definierbar und veränderbar sind.

Ein weiterer Vorteil der Erfindung besteht darin, dass bei virtuellen Feldversuchen der Aufwand für eine portable Messausrüstung und der Transport von Material und Leuten wegfällt.

Speziell vorteilhaft ist es, dass durch die Verwendbarkeit nur schwer portabler Laboranalysegeräte die Vielfalt und Qualität der Testmethoden zur Modementwicklung verbessert werden können.

Weitere Ausführungen, Vorteile und Anwendungen der Erfindung ergeben sich aus den abhängigen Ansprüchen sowie aus der nun folgenden Beschreibung anhand der Figuren.

### KURZE BESCHREIBUNG DER ZEICHNUNG

Es zeigen:
- Fig. 1: eine Anordnung zum Test von PLC-Modems mit einer auf einem Computer simulierten Stromleitung;
- Fig. 2: eine schematische Darstellung der Signalverarbeitungsschritte im Computer.

In den Figuren sind gleiche Teile mit gleichen Bezugszeichen versehen.

### WEGE ZUR AUSFÜHRUNG DER ERFINDUNG

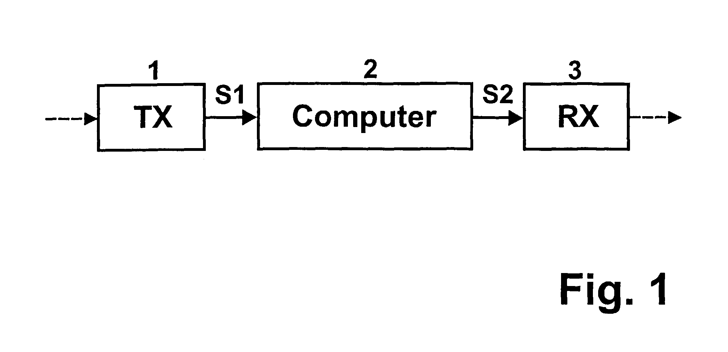

Fig. 1 zeigt ein Ausführungsbeispiel eines hardwaremässigen Aufbaus für erfindungsgemässe virtuelle Feldversuche mit Kommunikationsgeräten oder PLC-Modems 1, 3. In einem Computer 2 werden eine Impulsantwort S3 und ein Rauschsignal S4 einer Stromleitung gespeichert. Von einem Sendemodem 1 wird ein Telegramm S1 gesendet und als Analogsignal vom Computer 2 erfasst. Im Computer 2 wird ein Empfangssignal S2 berechnet und als Analogsignal auf ein Empfangsmodem 3 ausgegeben. Zwischen den Kommunikationsgeräten 1, 3 und dem Computer 2 sind entsprechende Schnittstellen, vorzugsweise ein DAQ-Einschub für einen stationären Computer 2 oder eine PCMCIA DAQ™-Karte (Firma National Instruments, U.S.A.) für einen portablen Computer 2, vorgesehen, die zusätzlichen Pufferspeicher haben können. Nicht dargestellt sind Ansteuergeräte für das Sendemodem 1 und Analysegeräte für das Empfangsmodem 3.

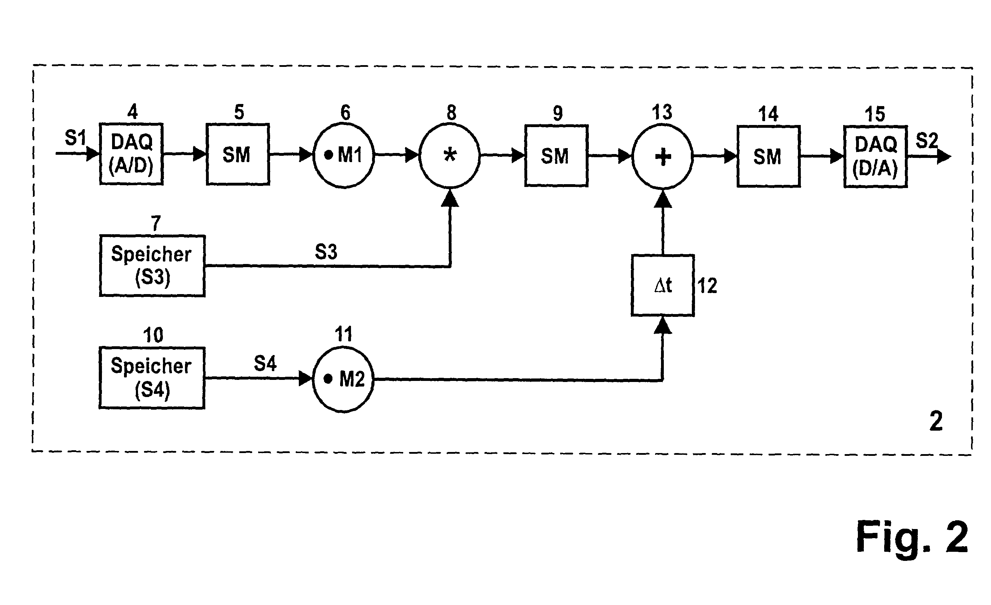

Fig. 2 zeigt ein bevorzugtes Ausführungsbeispiel für die erfindungsgemässen Rechenschritte im Computer 2. Das analoge Sendesignal S1 wird von einer Datenaquisitionskarte 4 ("DAQ™-card") mit Analog/Digital-Wandler aufgenommen und digitalisiert, in einem Speichermedium 5 abgelegt und in einem Multiplizierer 6 mit einem Multiplikationsfaktor M1 gewichtet. Eine Impulsantwort S3 für eine zu simulierende Stromleitung wird von einem Speichermedium 7 abgerufen oder anderweitig erzeugt, mit dem gewichteten Telegramm gefaltet 8 und im Medium 9 zwischengespeichert. Ein Rauschsignal S4 wird von einem Speichermedium 10 abgerufen oder von einem Rauschgenerator 10 erzeugt, in einem Multiplizierer 11 mit einem Multiplikationsfaktor M2 gewichtet, in einer Warteschleife 12 um eine vorgebbare Zeit Δt verzögert und zum zwischengespeicherten Telegramm addiert 13. Die Summe beider Signale wird nochmals zwischengespeichert 14, auf eine DAQ-Karte 15 mit D/A-Wandler gegeben und als analoges Empfangssignal S2 an ein Empfangsmodem 3 ausgegeben.

Weitere Ausführungsbeispiele ergeben sich durch Variation der oben genannten Signalverarbeitungsschritte. Z. B. sind die Zwischenspeicherungen 5, 9 und vor allem 14 nicht zwingend erforderlich. Sie sind von Vorteil, wenn Rechenzeit oder Rechenkapazität eingespart werden sollen oder verschiedene Telegramme S1, Impulsantworten S3 und/oder Rauschsignale S4 in verschiedenen Kombinationen und mit verschiedenen Gewichten M1, M2 ausgetestet werden sollen.

Die Multiplikationsfaktoren M1 und M2 sind beliebig vorgebbar und variierbar. Die Spezialfälle M2=0 und M1=0 entsprechen einer Vernachlässigung bzw. ausschliesslichen Berücksichtigung des Rauschens. Für M1=1 oder M2=1 können die Multiplizierer 6 oder 11 auch wegfallen.

Die Zeitverzögerung Δt des Rauschsignals S4 kann je nach Typ des zu untersuchenden Rauschens konstant, auch gleich Null, oder variabel gewählt werden. Beispielsweise kann Δt regelmässig oder bevorzugt mit einem Zufallsgenerator statistisch verteilt gewählt werden.

Ein lineares Übertragungsverhalten liegt vor, falls die Stromleitung während der Übertragung eines Anregeimpulses unverändert bleibt. Verschiedene Betriebszustände des Stromnetzes oder der Stromleitung können durch die zugehörigen Impulsantworten S3 oder Übertragungsfunktionen charakterisiert werden. Statt einer Faltung 8 des Telegramms S1 mit einer Impulsantwort S3 im Zeitraum könnte prinzipiell auch eine Multiplikation des Telegramms S1 mit einer komplexen linearen Übertragungsfunktion im Frequenzraum ausgeführt werden. Durch die Impulsantwort werden also sowohl die Amplitudenabschwächung als auch die Phasenverschiebung bzw. Gruppenverzögerung in der Stromleitung als Funktion der Frequenz berücksichtigt.

Mit Vorteil werden für die Impulsantwort S3 und das Rauschsignal S4 an realen Stromleitungen gemessene Signale verwendet. Vorzugsweise können die im eingangs erwähnten Artikel genannten Messmethoden eingesetzt werden. Dabei wird eine pseudozufällige binäre Sequenz von Rechteckspannungspulsen in die Stromleitung eingespeist, das transmittierte Signal erfasst und mit der ursprünglich gesendeten Sequenz korreliert. Die Korrelation enthält dann eine periodische Aneinanderreihung von Impulsantworten S3 des Kanals. Das Rauschsignal S4 wird vorzugsweise durch eine kombinierte Zeit-Frequenz-Analyse bestimmt. Alternativ können auch modellierte Übertragungsfunktionen S3 und Rauschsignale S4 verwendet werden.

Wie im Artikel erwähnt kann auch zur Korrektur eines nichtidealen simulierten Anregeimpulses die Impulsantwort S3 mit einer vorgebbaren Korrekturfunktion gefaltet werden. Beispielsweise kann eine Korrekturfunktion für einen interessierenden Frequenzbereich dadurch gebildet werden, dass der simulierte Anregeimpuls fouriertransformiert und in einem zu korrigierenden Frequenzbereich invertiert und fourierrücktransformiert wird. Auf diese Weise kann ein weitgehend weisses Frequenzspektrum des Anregeimpulses realisiert werden.

Das erfindungsgemässe Testverfahren ist sehr gut geeignet zur Entwicklung, Optimierung und Überprüfung der Hardware und Software von PLC-Modems 1, 3. Die Erfindung hat zusätzlich zu den eingangs genannten noch weitere Vorteile. Die durch veränderliche Konfigurationen und Betriebszustände des Stromnetzes bedingten Impulsantworten oder Übertragungsfunktionen und die typischen Rauschquellen können in ihrer separaten und kombinierten Wirkung sehr einfach simuliert werden. Ferner sind realitätsnahe Prüfungen von Modulations-Algorithmen und des Synchronisationsverhaltens der Modems 1, 3 sehr einfach durchführbar. Insgesamt ergibt sich ein grosser Nutzen daraus, dass zum Test realer Modems 1, 3 virtuelle Stromleitungen zur Verfügung gestellt werden können.

### BEZUGSZEICHENLISTE

- 1: Kommunikationsgerät, Sendemodem TX
- 2: Computer
- 3: Kommunikationsgerät, Empfangsmodem RX
- 4: Signalerfassung, DAQ-Karte mit A/D-Wandler
- 5, 9, 14: Speichermedien, Zwischenspeicher
- 6: Multiplikator
- 7: Speichermedium für Impulsantwort
- 8: Faltung
- 10: Speichermedium für Stromleitungsrauschen, Rauschgenerator
- 11: Multiplikator
- 12: Warteschleife, Zeitverzögerung At
- 13: Addierer
- 15: Signalausgabe, DAQ-Karte mit D/A-Wandler

- M1, M2: Multiplikationsfaktoren
- SM: Speichermedien
- S1: Telegramm, Sendesignal
- S2: berechnetes Signal, Empfangssignal
- S3: Impulsantwort der Stromleitung
- S4: Rauschsignal

## Patentansprüche

1. Verfahren zum Test von Kommunikationsgeräten (1, 3), die zur Datenübertragung über Stromleitungen geeignet sind, wobei eine Impulsantwort (S3) und/oder ein Rauschsignal (S4) der Stromleitung bekannt sind, dadurch gekennzeichnet, dass
a) eine Impulsantwort (S3) und/oder ein Rauschsignal (S4) der Stromleitung in einem Computer (2) gespeichert werden,
b) ein Telegramm (S1) von einem Kommunikationsgerät (1) ausgesendet und als Analogsignal vom Computer (2) erfasst wird und
c) ein Empfangssignal (52) im Computer (2) berechnet und als Analogsignal auf ein Kommunikationsgerät (3) ausgegeben wird.

2. Verfahren nach Anspruch 1, dadurch gekennzeichnet, dass die Berechnung des Empfangssignals (S2) folgende Schritte umfasst:
a) das Telegramm (S1) wird mit der Impulsantwort (S3) gefaltet (8) und
b) das Rauschsignal (S4) wird mit einer vorgebbaren Zeitverzögerung At hinzuaddiert (13).

3. Verfahren nach einem der Ansprüche 1 - 2, dadurch gekennzeichnet, dass die Impulsantwort (S3) und das Rauschsignal (S4) aus Messungen an einer Stromleitung gewonnen wurden.

4. Verfahren nach Anspruch 3, dadurch gekennzeichnet, dass
a) die Impulsantwort (S3) durch Korrelation einer gesendeten mit einer transmittierten pseudozufälligen binären Sequenz von Rechteckspannungspulsen gemessen wurde und
b) insbesondere das Rauschsignal (S4) durch eine kombinierte Zeit-Frequenz-Analyse gemessen wurde.

5. Verfahren nach einem der Ansprüche 1 - 4, dadurch gekennzeichnet, dass die Impulsantwort (S3) mit einer vorgebbaren Korrekturfunktion gefaltet wird.

6. Verfahren nach einem der Ansprüche 1 - 5, dadurch gekennzeichnet, dass die Zeitverzögerung Δt des Rauschsignals (S4) variabel, vorzugsweise statistisch verteilt, gewählt wird.

7. Verfahren nach einem der Ansprüche 1 - 6, dadurch gekennzeichnet, dass das Telegramm (S1) vor der Faltung (8), nach der Faltung (8) und/oder nach der Addition (13) zwischengespeichert (5, 9, 14) wird.

8. Verfahren nach einem der Ansprüche 1 - 7, dadurch gekennzeichnet, dass das Telegramm (S1) und das Rauschsignal (S4) vor der Addition (5) mit Multiplikationsfaktoren M1 und M2 gewichtet werden.

9. Verfahren nach Anspruch 8, dadurch gekennzeichnet, dass der Multiplikationsfaktor M1=0 gewählt wird.

10. Verfahren nach Anspruch 8, dadurch gekennzeichnet, dass der Multiplikationsfaktor M2=0 gewählt wird.
